# EUROPÄISCHE PATENTSCHRIFT

(11) **EP 0 958 032 B1**
(45) Veröffentlichungstag und Bekanntmachung des Hinweises auf die Patenterteilung: **04.07.2001**
(21) Anmeldenummer: 97918950.3
(22) Anmeldetag: 31.07.1997
(51) Int. Cl.: B01D 46/24, F02M 35/024

(54) **FILTERPATRONE**
FILTER CARTRIDGE
CARTOUCHE FILTRANTE

(30) Priorität: 28.08.1996 DE 19634720
(43) Veröffentlichungstag der Anmeldung: 24.11.1999
(73) Patentinhaber: FILTERWERK MANN & HUMMEL GmbH, 71631 Ludwigsburg (DE)
(72) Erfinder: BINDER, Walter, D-71522 Backnang (DE); MÜLLER, Heinz, D-71686 Remseck (DE)
(74) Vertreter: Voth, Gerhard, Dipl.-Ing.
(86) Internationale Anmeldenummer: EP9704179
(87) Internationale Veröffentlichungsnummer: WO9808589

(56) Entgegenhaltungen:
- EP-A- 0 726 389
- EP-A- 0 738 534
- WO-A-96/12550
- FR-A- 1 569 913
- FR-A- 2 075 860
- FR-A- 2 251 347
- FR-A- 2 701 656
- GB-A- 2 119 674
- US-A- 4 128 251

## Beschreibung

Die Erfindung betrifft eine Filterpatrone, insbesondere für einen Ansaugluftfilter einer Brennkraftmaschine nach dem Oberbegriff des Hauptanspruchs.

Eine Filterpatrone dieser Art wird in dem DE-U-88 05 049 beschrieben. Derartige Filterpatronen weisen jedoch den Nachteil auf, daß sich in Fällen extremer Beanspruchung der Außenrand des Stütz- und Dichtringes von der Filterpapierbahn lösen kann, da dort nur eine kraftschlüssige Verbindung vorhanden ist. Es kommt dann eine unmittelbare Verbindung zwischen dem Rohlufteinlaß und dem Reinluftauslaß zustande, deren Durchtrittsquerschnitt zwar klein ist, die aber dennoch Störungen oder erhöhten Verschleiß der nachgeordneten Brennkraftmaschine zur Folge haben kann.

Die DE-A- 27 38 086 zeigt eine Filterpatrone, die aus einem Filtermaterial und einem daran angegossenen Flanschteil aus einem gießfähigen, aushärtenden Material, z. B. Kunststoff oder Gummi besteht, welches nach dem Aushärten flexibel bleibt. Das Filtermaterial ist im Endbereich in das Flanschmaterial eingebettet. Um hier eine sichere Verbindung zu schaffen, wird vorgeschlagen, das Filtermaterial mit einer Lochung zu versehen, so daß beim Angießen des Flanschteils das flüssige Material durch die Löcher im Filtermaterial fließt und so eine Zapfenverbindung zwischen dem Filtermaterial und dem Flanschmaterial herstellt.

Als nachteilig wird bei dieser bekannten Filterpatrone angesehen, daß für das Angießen des Flanschteils eine Gießform benötigt wird, was im Zusammenhang mit der relativ langsamen Aushärtung eine lange Taktzeit und damit eine geringe Produktivität ergibt.

Ein weiterer Nachteil ist auch darin zu sehen, daß der Filterpapierkörper mit einer Lochung versehen werden muß, die in einem zusätzlichen Arbeitsgang eingebracht wird und außerdem bei nicht vollständigem Ausgießen zu einem Kurzschluß zwischen der Rohluftseite und der Reinluftseite führt.

Es ist ferner aus der DE-A-38 38 540 eine Filterpatrone bekannt, die eine Endscheibe aus einem Dichtmaterial aufweist. Diese Endscheibe wird mittels eines speziellen Klebers mit dem Filterpapierkörper verbunden. Außerdem ist die Endscheibe derart gestaltet, daß eine Verzahnung zwischen Kleber und Endscheibe erfolgt. Damit zeigt sich jedoch auch schon der Nachteil, der darin zu sehen ist, daß die Endscheibe ein kompliziertes und aufwendig herzustellendes Bauteil ist.

Ein weiteres Problem bei der Verwendung einer Filterpatrone für die Ansaugluft einer Brennkraftmaschine besteht darin, daß die Dichtung, egal welche Form sie aufweist, ein optimales Langzeitverhalten aufweisen muß, d. h. selbst bei den bei Kraftfahrzeugen üblicherweise langen Serviceintervallen muß gewährleistet sein, daß keine Versprödung oder Rißbildung stattfindet und ein gewisser Druckverformungsrest erhalten bleiben muß, der auch über einen langen Zeitraum hinaus ein gutes Dichtungsverhalten gewährleistet.

Der Erfindung liegt daher die Aufgabe zugrunde, die genannten Nachteile zu vermeiden und eine Filterpatrone zu schaffen, die aus wenigen Bauteilen bzw. Komponenten besteht und gleichzeitig eine zuverlässige Abdichtung zwischen Rohluftseite und Reinluftseite gewährleistet.

Diese Aufgabe wird ausgehend von dem Oberbegriff des Hauptanspruchs durch dessen kennzeichnenden Merkmale gelöst.

Der wesentliche Vorteil der Erfindung ist darin zu sehen, daß die Dichtung aus einem Trägermedium und einem Dichtmedium beseht. Damit kann jeweils das Trägermedium und das Dichtmedium optimal an seine Aufgaben angepaßt werden. Das Trägermedium ist aus einem Polyurethanschaum herzustellen und das Dichtmedium aus Silikon oder Silikonschaum an dem Trägermedium anzuordnen. Diese Anordnung hat den Vorteil, daß ein preiswertes Trägermaterial mit einem hochwertigen Dichtmaterial kombiniert werden kann. Außerdem besteht die Möglichkeit, die Eigenschaften des Trägermaterials hinsichtlich Steifigkeit optimal auf den Filterkörper anzupassen, andererseits die Eigenschaften des Dichtmediums optimal an die Dichtstruktur anzupassen. So können z. B. Dichtrillen an dem Dichtelement vorgesehen sein, die nach Art einer Lippendichtung oder Labyrinthdichtung eine gute Dichtwirkung erzielen. Außerdem besteht die Möglichkeit, daß durch die Anordnung von Dichtrillen das Elastizitätsverhalten exakt einstellbar ist.

Die Endscheibe kann in einer Gestaltung im sogenannten Zweikomponentenverfahren hergestellt werden. Dies bedeutet, daß Kunststoffe unterschiedlicher Eigenschaften in einem einzigen Arbeitsgang miteinander verbunden werden.

Eine Weiterbildung der Erfindung sieht vor, das Dichtelement axial bzw. radial anzuordnen. Während die axiale Abdichtung einer Filterpatrone die bisher übliche Abdichtung darstellt, hat die radiale Abdichtung den Vorteil, daß Längentoleranzen der Filterpatrone einfacher ausgeglichen werden können.

Ausführungbeispiele der Erfindung sind in den Zeichnungen dargestellt und werden im nachfolgenden näher erläutert. Die Zeichnungen zeigen:
- Figur 1: eine Rundpatrone in Teilschnitt,
- Figur 1a: Detail A in einer ersten Variante,
- Figur 1b: Detail A in einer zweiten Variante,
- Figur 2: eine rechteckförmige Flachpatrone,
- Figur 2a: Detail B der Fig. 2,
- Figur 3: eine weitere Rundpatrone im Teilschnitt,
- Figur 3a: Detail C der Figur 3,
- Figur 4a - c: Detaildarstellungen einer Rundpatrone.

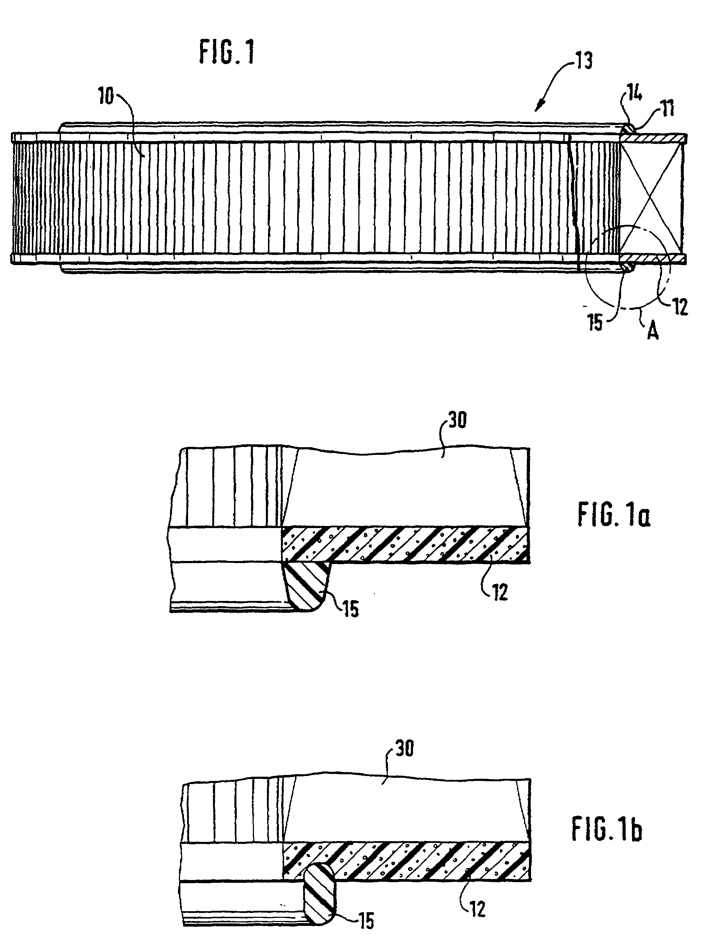

In Figur 1 ist eine Rundpatrone in Teilschnitt dargestellt. Diese besteht aus einem zick-zack-förmig gefalteten Filtermedium 10, insbesondere ein Filterpapier. Dieses Filtermedium ist an den beiden Stirnseiten mit jeweils einer Dichtung 11, 12 versehen. Die Dichtungen bestehen üblicherweise aus einem PUR-Schaum, der zum einen die Stirnkanten des Filtermediums überdeckt und damit verschließt, andererseits die Filterpatrone 13 in einem hier nicht dargestellten Gehäuse fixiert und abdichtet. Hierzu weisen die Dichtungen 11, 12 jeweils einen Ringwulst 14, 15 auf, der an einer Gehäusewandung anliegt.

In Figur 1a ist das Detail A der Figur 1 in vergrößertem Maßstab dargestellt. Der Ringwulst 15 der Dichtung 12 besteht aus einem Material mit sehr guten Dichtungseigenschaften, wobei das Material auch langzeitstabil ist. Es handelt sich um einen Silikonwerkstoff bzw. einen Silikonschaum.

Der Ringwulst 15 ist mit der aus Polyurethanschaum bestehenden Dichtung 12 adhäsiv oder kohäsiv verbunden.

In Figur 1b ist eine Alternative zur Figur 1 a dargestellt. Hier ist der Ringwulst in die Dichtung 12 eingebettet. Es besteht auch die Möglichkeit, die Dichtung 12 mit einem Hinterschnitt zu versehen und den Wulst in diese Dichtung einzuknüpfen. Die Montage des Teils 15 in der Dichtung 12 muß jedenfalls sicherstellen, daß ein unbeabsichtigtes Entfernen des Ringwulstes verhindert wird.

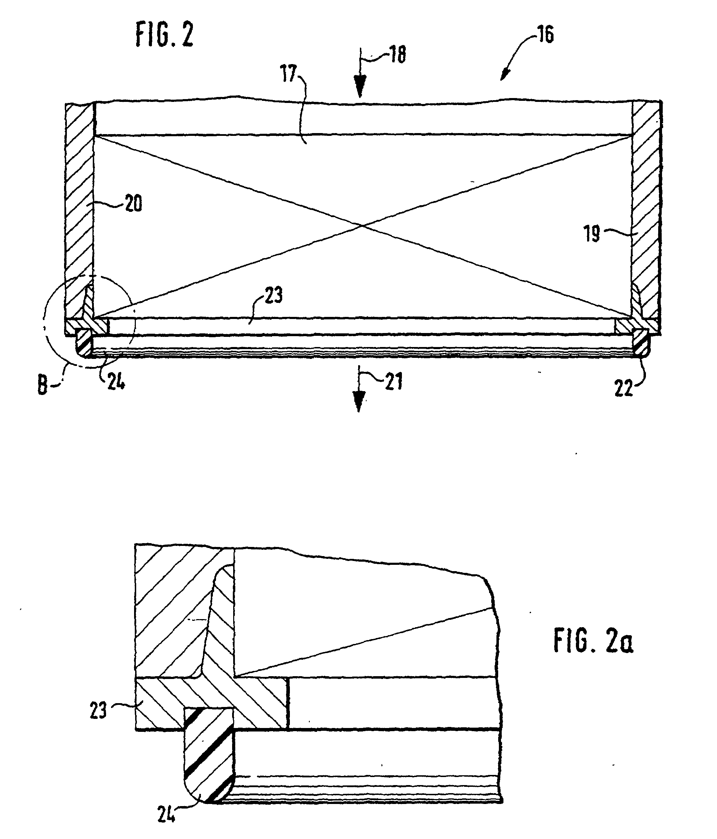

Figur 2 zeigt eine rechteckförmige Flachpatrone 16, die ebenfalls aus einem zick-zack-förmig gefalteten Filterpapier 17 besteht. Die Flachpatrone 16 wird von oben gemäß dem Pfeil 18 mit Rohluft angeströmt. Das zick-zack-förmig gefaltete Filterpapier ist an den Seitenflächen 19, 20 verschlossen und bildet somit Filtertaschen. Die in der Rohluft befindlichen Schmutzpartikel lagern sich in den Filtertaschen ab. Die Reinluft verläßt das Filterelement gemäß dem Pfeil 21.

Die Abdichtung zwischen Rohluftraum und Reinluftraum erfolgt über die umlaufende Dichtung 22. Diese Dichtung 22 ist in einer Detaildarstellung gemäß Figur 2a aus zwei Komponenten gestaltet. Der obere Teil ist ein Trägermedium 23, der untere Teil ist ein Dichtmedium 24. Dieses Dichtmedium besteht bevorzugt aus Silikon. Das Trägermedium ist ein Polyurethanschaum. Selbstverständlich besteht die Möglichkeit, das Dichtmedium 24 mit einer geeigneten Geometrie zu versehen, die eine hohe Dichtwirkung erzielt. So besteht die Möglichkeit, das Dichtmedium mit Dichtlippen zu versehen, die ein gutes Dichtungsverhalten aufweisen.

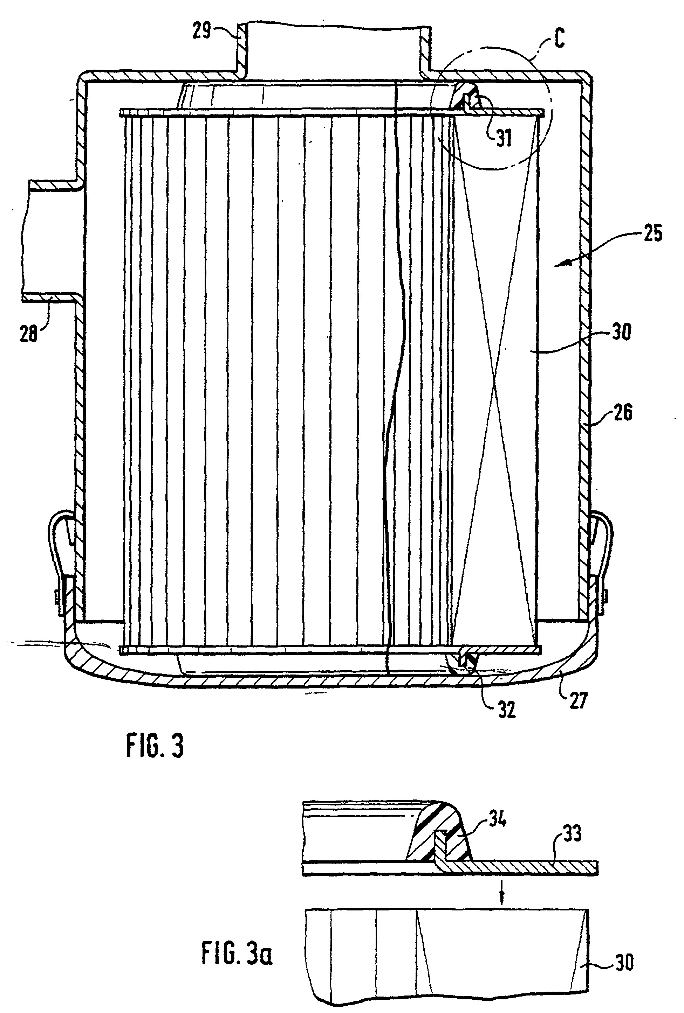

Figur 3 zeigt eine Rundpatrone 25 in einem Filtergehäuse 26. Das Filtergehäuse 26 ist mit einem Deckel 27 verschlossen und weist einen Rohlufteinlaß 28 sowie einen Reinluftauslaß 29 auf. Die Filterpatrone 25 besteht auch hier aus einem zick-zack-förmig gefalteten Filtermedium 30, das an den Stirnseiten Dichtungen 31, 32 aufweist. Diese Dichtungen sind - wie in Figur 3a gezeigt - aus zwei Komponenten aufgebaut, einem Trägermedium 33 und einem Dichtmedium 34, die miteinander verbunden sind.

## Patentansprüche

1. Filterpatrone, insbesondere für einen Ansaugluftfilter einer Brennkraftmaschine, mit einem aus einem Filtermedium, insbesondere einer Filterpapierbahn, bestehender hohlzylindrischen Filterkörper (10), der an wenigstens einer Stirnseite mit einer Endscheibe versehen ist, wobei diese Endscheibe ein Dichtelement (12) aufweist, dadurch gekennzeichnet, daß das Dichtelement (12) aus einem Trägermedium und einem Dichtmedium (15) besteht, wobei das Trägermedium ein Polyurethanschaum ist und das Dichtmedium (15) aus Silikon oder Silikonschaum besteht.

2. Filterpatrone nach Anspruch 1, dadurch gekennzeichnet, daß die Endscheibe im Zweikomponenten-Spritzgießverfahren hergestellt ist.

3. Filterpatrone nach einem der vorhergehenden Ansprüche, dadurch gekennzeichnet, daß das Dichtmedium ein axial und/oder radial wirkendes Dichtelement ist.

4. Filterpatrone nach einem der vorhergehenden Ansprüche, dadurch gekennzeichnet, daß das Dichtmedium eine Lippendichtung ist, welche mehrere Dichtungsrillen aufweist.

## Claims

1. Filter cartridge, more especially for an intake air filter of an internal combustion engine, said cartridge including a hollow-cylindrical filter body (10), which comprises a filter medium, more especially a filter paper web, and is provided with an end plate on at least one end face, this end plate having a sealing element (12), characterised in that the sealing element (12) comprises a carrier medium and a sealing medium (15), the carrier medium being a polyurethane foam, and the sealing medium (15) being formed from silicone or silicone foam.

2. Filter cartridge according to claim 1, characterised in that the end plate is produced by the two-component injection moulding method.

3. Filter cartridge according to one of the preceding claims, characterised in that the sealing medium is an axially and/or radially acting sealing element.

4. Filter cartridge according to one of the preceding claims, characterised in that the sealing medium is a lip seal, which includes a plurality of sealing grooves.

## Revendications

1. Cartouche filtrante, en particulier pour purifier l'air aspiré par un moteur à combustion interne, comprenant un corps de filtre (10) cylindrique creux fait d'un media filtrant, en particulier d'une bande de papier filtre, et portant sur au moins une face frontale un disque d'extrémité équipé d'un élément d'étanchéité (12),
caractérisée en ce que
l'élément d'étanchéité (12) est composé d'un media porteur et d'un media d'étanchéité (15), le média porteur étant une mousse de polyuréthane, et le média d'étanchéité (15) étant en silicone ou en mousse de silicone.

2. Cartouche filtrante selon la revendication 1,
caractérisée en ce que
le disque d'extrémité est fabriqué par le procédé d'injection à deux composants.

3. Cartouche filtrante selon l'une des revendications 1 ou 2,
caractérisée en ce que
le media d'étanchéité est un élément d'étanchéité agissant axialement et/ou radialement.

4. Cartouche filtrante selon l'une quelconque des revendications précédentes,
caractérisée en ce que
le media d'étanchéité est un joint à lèvres, présentant plusieurs gorges d'étanchéité.
